# EUROPEAN PATENT SPECIFICATION

(11) **EP 4 012 196 B1**
(45) Date of publication and mention of the grant of the patent: **07.06.2023**
(21) Application number: 20212445.9
(22) Date of filing: 08.12.2020
(51) Int. Cl.: F16B 5/02, A47B 95/00

(54) **SUPPORT BRACKET FOR FURNITURE**
AUFLAGEWINKEL FÜR MÖBEL
SUPPORT POUR MEUBLES

(43) Date of publication of application: 15.06.2022
(73) Proprietor: Götessons Industri AB, 523 38 Ulricehamn (SE)
(72) Inventor: Svensson, Thomas, 523 45 Ulricehamn (SE); Andersson, Jonathan, 513 92 Fristad (SE)
(74) Representative: AWA Sweden AB

(56) References cited:
- DE-U1- 20 015 585
- US-A1- 2012 304 441

## Description

### Technical Field

The present disclosure relates to a support bracket, and especially a support bracket for a wall section in a furniture arrangement, such as a table or desk.

### Background

In a furniture arrangement, there may be items suspended on a wall using consoles or other types of brackets, or wall items such as a screen wall attached to a tabletop or desktop. To achieve a suspension of a screen wall to a desktop, tabletop, shelf, or the like that has a substantially horizontal surface, there is a dependency between the items. A conventional bracket or console used to attach such desk item to a wall or screen wall is a right-angled bracket or console attached to both parts, for instance as disclosed in

A fitting made of a flat material to form a bracket is disclosed in DE 200 15 585 U1.

In special circumstances, there may be a need for an attachment between the desk item and the wall or screen wall that is not in a right angle. Intermediate parts may then be needed, inserted between a portion of the bracket or console and one of the parts. However, such solution would negatively affect the stability of the attachment.

Consequently, there is a need for a solution to attach a desk item to a wall or screen wall that overcomes such drawbacks.

### Summary

It is an object of the present invention to provide an improved solution that alleviates the mentioned drawbacks with present devices. Furthermore, it is an object to provide a support bracket that is easy to adjust.

The invention is defined by the appended independent claims, with embodiments being set forth in the appended dependent claims, in the following description and in the drawings.

According to a first aspect of the present invention, a support bracket is provided. The support bracket comprises a support portion configured to be attached to, when in use, a first furniture member. The support bracket further comprises a first mounting portion and a second mounting portion, which mounting portions are configured to, when in use, be attached to a second furniture member by fastening means. Further, the first mounting portion extends from the support portion with a first angle being between 91-110 degrees, and the second mounting portion extends from the first mounting portion with a second angle being between 160-179 degrees.

By a furniture member it may be meant a member of a furniture arrangement, such as a shelf, a tabletop, a desktop, a wall, a screen wall, or the like. The first furniture member may be referred to as a desk member or table member. The first furniture member may be attached to the support portion of the support bracket. The second furniture member may in one embodiment be a wall section. By wall section it may be meant a rigid wall or wall section of a building, a movable wall member, a screen wall configured to be arranged to the first furniture member, or the like. A screen wall may for instance be a table screen or desk screen configured to be arranged to and suspended by a first furniture member being a tabletop or desktop. Such screen wall may have a rigid core to which the support bracket may be attached, which core may be covered by a fabric, textile, cloth, or the like.

The support bracket according to the present invention may provide a facilitated adjustment of the bracket and thereby the arrangement of the first furniture member relative to the second furniture member to which the support bracket may be arranged. When the support bracket is arranged to a second furniture member, the first and second mounting portions may be attached to the second furniture member. Due to the second angle between the first and second mounting portions being less than 180 degrees, an adjustment of the attachment to the second furniture member by the fastening means may provide how the support bracket is arranged relative to the surface of the second furniture member. A second furniture member being e.g. a wall section may have a substantially flat surface. The support bracket may be attached to the second furniture member with different attachment configuration to the first mounting portion than to the second mounting portion. Depending on such configuration, the angle of the support portion relative to the surface of the second furniture member may be different. The fastening means may attach the first and second mounting portions to the second furniture member with different strength, thereby configuring the mounting portions' attachment to the second furniture member.

By adjustment of the support bracket, a first furniture member attached to the support portion may be tilted to be arranged at a desired angle, or the vertical alignment of the second furniture member relative to the first furniture member may be adjusted. By having the first angle being more than 90 degrees, the support bracket may be adjusted in both directions (the support portion's angle relative a surface of the second furniture member may be tilted both upwards and downwards from an intermediate horizontally leveled position).

In one embodiment, the second angle may be between 172-178 degrees. In one embodiment, the second angle may be between 174-176 degrees. In one embodiment, the second angle may be about 176 degrees. Depending on the level of the second angle, the level of adjustability of the support bracket may be different.

In one embodiment, the first angle may be between 91-96 degrees. In one embodiment, the first angle may be between 92-94 degrees. In one embodiment, the first angle may be about 92 degrees. The first angle may be selected in order to provide a straight angle of the support portion relative to the surface of the second furniture member when the mounting portions are attached to the second furniture member in an intermediate position. The intermediate position may be a position where the two mounting portions are arranged with the same angle relative to the surface of the wall section. Such angle may be equal to (180 - A2)/2, where A2 is the second angle. This may provide that in an embodiment where the second angle is 176 degrees, each of the mounting portions are arranged to the second furniture member with an angle of 2 degrees relative to the surface of the second furniture member.

In one embodiment, the first angle may be selected as equal to 90 + (180-A2)/2 where A2 is the second angle. This may provide that in an embodiment where the second angle is 176 degrees, the first angle is 92 degrees.

In one embodiment, the second mounting portion may extend with a third angle relative to the support portion being less than the first angle. This may provide that the extension of the second mounting portion from the first mounting portion may provide a bend towards the support portion. Or put in other words, the extension of the second mounting portion from the first mounting portion with the second angle may provide, when the first mounting portion is attached in parallel with the surface of the second furniture member, that the second mounting portion extends with an angle relative to the surface of the second furniture member.

In one embodiment, the third angle may be equal to the first angle minus the difference of 180 degrees minus the second angle. In other terms A1 - (180 - A2), where A1 is the first angle and A2 the second angle.

In one embodiment, each of the first and second mounting portions may be configured to be attached to the second furniture member by means of at least one fastening means. Such fastening means may in one embodiment be screws. The first mounting portion may thereby be configured to receive at least one first fastening means and be attached to the second furniture member by such first fastening means, and the second mounting portion may be configured to receive at least one second fastening means and be attached to the second furniture member by such second fastening means. When the support bracket is arranged to a second furniture member, adjustment of the first fastening means and the second fastening means may adjust the first and second mounting portions' arrangement relative the surface of the second furniture member, and thereby also the support portion's and a furniture member's arrangement relative the surface of the second furniture member.

According to a second aspect of the present invention, a furniture arrangement is provided. The furniture arrangement comprises a support bracket according to any of the embodiments above, a first furniture member attached to the support portion of the support bracket, a second furniture member, wherein the support bracket is arranged to the second furniture member by at least one first fastening means attaching the first mounting portion to the second furniture member and at least one second fastening means attaching the second mounting portion to the second furniture member. Further, a fourth angle between the second furniture member and the first furniture member is adjustable by adjusting the at least one first fastening means' and the at least one second fastening means' attachment to the second furniture member.

The functions and details of the embodiments of the support bracket as discussed above apply to the furniture arrangement as well.

In one embodiment, the at least one first fastening means may be at least one first screw, and the at least one second fastening means may be at least one second screw.

In one embodiment, the first furniture member may be a tabletop or a desktop, and the second furniture member may be a screen wall arranged to the tabletop or desktop by means of the support bracket. The furniture arrangement may thereby be a table or desk arrangement.

The furniture member may be arranged in a substantially horizontal manner, and the second furniture member being e.g. a wall section may be arranged in a substantially vertical manner, attached to the first furniture member via the support bracket. In some embodiments, the second furniture member may be attached to the furniture member via one, two or more support brackets.

### Brief Description of the Drawings

The invention will in the following be described in more detail with reference to the enclosed drawings, wherein:
Fig. 1 is a perspective view of a furniture arrangement according to an embodiment of the present invention;
Fig. 2 is a perspective view of a support bracket according to an embodiment of the present invention;
Fig. 3 is a cross-sectional side view of a support bracket according to an embodiment of the present invention; and
Fig. 4 is a side view of a furniture arrangement according to an embodiment of the present invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

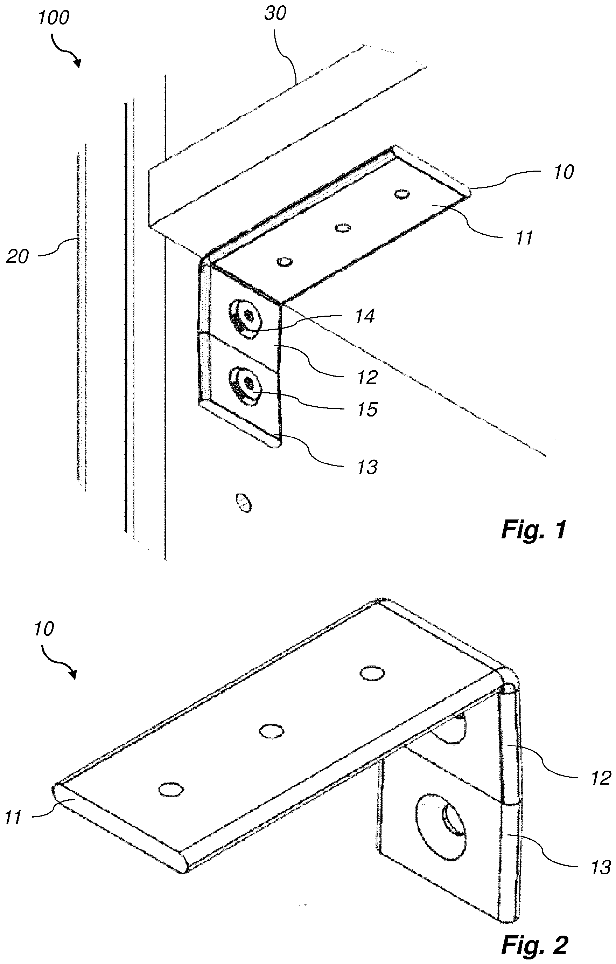

Fig. 1 illustrates a desk arrangement 100 according to an embodiment, comprising a second furniture member in the form of a wall section 20, a support bracket 10 and a desk member 30. The support bracket 10 is arranged to the wall section 20 by one first screw 14 and one second screw 15. In the illustrated embodiments, the furniture arrangement comprising a first furniture member and a second furniture member will be exemplified by a desk arrangement 100 comprising a desk member 30 and a wall section 20. What is disclosed for the desk arrangement 100 is equally applicable to other furniture arrangements, such as a table or shelf arrangement.

The support bracket 10 comprises a support portion 11 being attached to the desk member 30. The support portion 11 may be provided with holes such that the desk member 30 may be attached thereto using screws (not shown). The support bracket 10 further comprises a first mounting portion 12 and a second mounting portion 13. The support bracket 10 is further illustrated in fig. 2.

The first screw 14 attaches the first mounting portion 12 to the wall section 20. The second screw 15 attaches the second mounting portion 13 to the wall section 20.

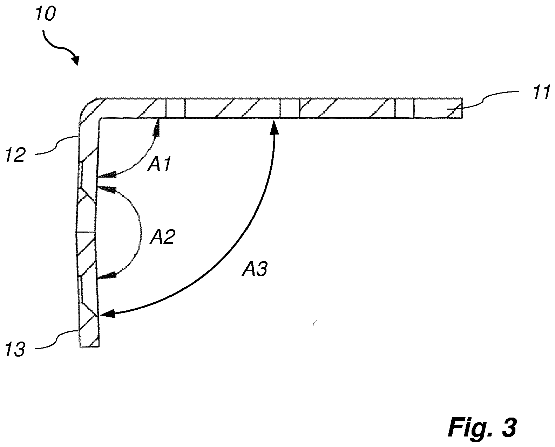

As seen in Fig. 3, the first mounting portion 12 is attached to the support portion 11 with a first angle A1. The first angle A1 is more than 90 degrees, and in the illustrated embodiment about 92 degrees. The first mounting portion 12 and the second mounting portion 13 are arranged to each other with a second angle A2 that is less than 180 degrees, in the illustrated embodiment about 176 degrees. The second mounting portion 13 is arranged relative to the first mounting portion such that a third angle A3 between the second mounting portion 13 and the support portion 11 is less than the first angle A1. In the illustrated embodiment of Fig. 3, the third angle A3 is about 88 degrees.

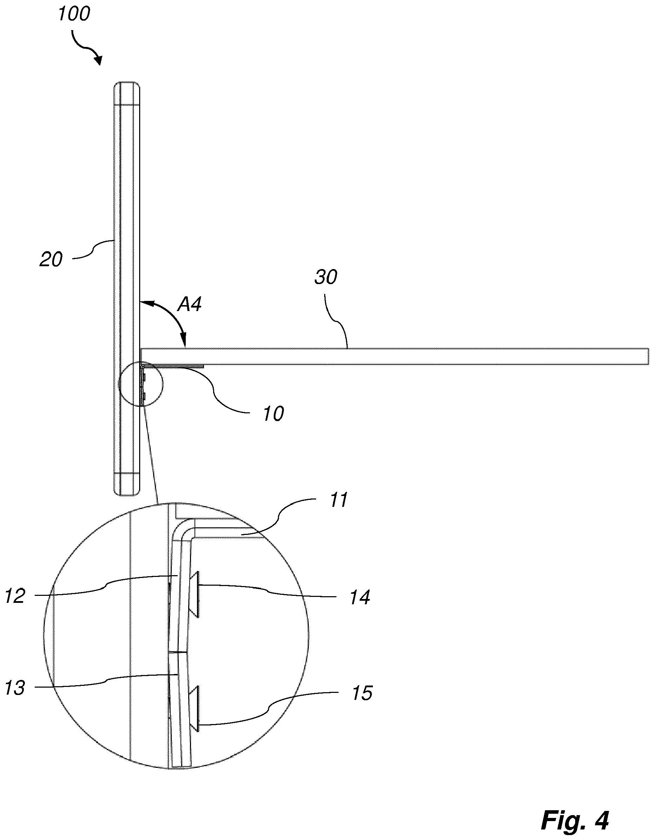

Fig. 4 illustrates the desk arrangement 100 with a zoomed in portion of the support brackets' 10 attachment to the wall section 20. The wall section 20 in the embodiment illustrated in Fig. 4 is a screen wall suspended on the desk member 30 by means of the support bracket 10. In Fig. 4, the support bracket 10 is illustrated in the intermediate position relative to the wall section 20 as discussed above. The first mounting portion 12 is thereby arranged relative to the surface of the wall section 20 with the same angle as the second mounting portion 13. In the illustrated embodiment such angle would be about 2 degrees following that the second angle A2 is about 176 degrees. In a situation as illustrated in Fig. 4, the wall section 20 is arranged with a fourth angle A4 relative to the desk member 30 being about 90 degrees.

If it is desired that the wall section 20 be inclined relative to the surface of the desk member 30 to be more or less than 90 degrees, i.e. that the fourth angle A4 be increased or decreased, the attachment of the support bracket 10 to the wall section 20 may be adjusted. Such adjustment is thereby made by adjusting the attachment of the first and second screws 14, 15 to the wall section 20. If the fourth angle A4 is to be decreased, the first screw's 14 attachment to the wall section 20 may be tightened and the second screw's 15 attachment may be loosened. If the fourth angle A4 is to be increased, the first screw's 14 attachment to the wall section 20 may be loosened and the second screw's 15 attachment may be tightened. The same adjustability may be used in a situation where the wall section 20 is a rigid wall and the desk member 30 may be e.g. a shelf which is desired to be tilted upwards or downwards relative to an initial perpendicular extension relative to the wall section 20.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A support bracket (10) comprising
a support portion (11) configured to be attached to, when in use, a first furniture member (30),
a first mounting portion (12), and
a second mounting portion (13), the first and second mounting portions being configured to, when in use, be attached to a second furniture member (20) by fastening means (14, 15),
**characterized in that** the first mounting portion extends from the support portion with a first angle (A1) being between 91-110 degrees, and the second mounting portion extends from the first mounting portion with a second angle (A2) being between 160-179 degrees.

2. The support bracket (10) according to claim 1, wherein the second angle (A2) is between 172-178 degrees.

3. The support bracket (10) according to claim 1 or 2, wherein the second angle (A2) is between 174-176 degrees.

4. The support bracket (10) according to any of the preceding claims, wherein the first angle (A1) is between 91-96 degrees.

5. The support bracket according to any of the preceding claims, wherein the first angle (A1) is between 92-94 degrees.

6. The support bracket (10) according to any of the preceding claims, wherein the second mounting portion (13) extends with a third angle (A3) relative to the support portion (11) being less than the first angle (A1).

7. The support bracket (10) according to claim 6, wherein the third angle (A3) is equal to the first angle (A1) minus the difference of 180 degrees minus the second angle (A2).

8. The support bracket (10) according to any of the preceding claims, wherein each of the first and second mounting portions (11, 12) is configured to be attached to the second furniture member by means of at least one fastening means (14, 15).

9. The support bracket (10) according to any of the preceding claims, wherein the second furniture member is a wall section (20) and the first and second mounting portions (11, 12) are configured to be attached to said wall section, when in use, by fastening means.

10. A furniture arrangement (100) comprising
a support bracket (10) according to any of the preceding claims,
a first furniture member (20) attached to the support portion (11),
a second furniture member (20),
wherein the support bracket (10) is arranged to the second furniture member (20) by at least one first fastening means (14) attaching the first mounting portion (12) to the second furniture portion and at least one second fastening means (15) attaching the second mounting portion (15) to the second furniture member,
wherein a fourth angle (A4) between the first furniture member and the second furniture member is adjustable by adjusting the at least one first fastening means' (14) and the at least one second fastening means' (15) attachment to the second furniture member (20).

11. The furniture arrangement (100) according to claim 10, wherein the at least one first fastening means (14) is at least one first screw and the at least one second fastening means (15) is at least one second screw.

12. The furniture arrangement (100) according to claim 10 or 11, wherein the first furniture member (30) is a tabletop or a desktop, and the second furniture member (20) is a screen wall arranged to the tabletop or desktop by means of the support bracket (10).

## Patentansprüche

1. Auflagewinkel (10), umfassend
einen Auflageabschnitt (11), der so konfiguriert ist, dass er im Gebrauch an einem ersten Möbelelement (30) befestigt werden kann,
einen ersten Montageabschnitt (12) und
einen zweiten Montageabschnitt (13), wobei der erste und der zweite Montageabschnitt so konfiguriert sind, dass sie im Gebrauch an einem zweiten Möbelelement (20) durch Befestigungsmittel (14, 15) befestigt werden kann,
**dadurch gekennzeichnet, dass** der erste Montageabschnitt sich von dem Auflageabschnitt in einem ersten Winkel (A1) zwischen 91 und 110 Grad erstreckt, und der zweite Montageabschnitt sich von dem ersten Montageabschnitt in einem Winkel (A2) zwischen 160 und 179 Grad erstreckt.

2. Auflagewinkel (10) nach Anspruch 1, wobei der zweite Winkel (A2) zwischen 172 und 178 Grad beträgt.

3. Auflagewinkel (10) nach Anspruch 1 oder 2, wobei der zweite Winkel (A2) zwischen 174 und 176 Grad beträgt.

4. Auflagewinkel (10) nach einem der vorhergehenden Ansprüche, wobei der erste Winkel (A1) zwischen 91 und 96 Grad beträgt.

5. Auflagewinkel nach einem der vorhergehenden Ansprüche, wobei der erste Winkel (A1) zwischen 92 und 94 Grad beträgt.

6. Auflagewinkel (10) nach einem der vorhergehenden Ansprüche, wobei der zweite Montageabschnitt (13) sich im Verhältnis zum Auflageabschnitt (11) in einem dritten Winkel (A3) erstreckt, der kleiner als der erste Winkel (A1) ist.

7. Auflagewinkel (10) nach Anspruch 6, wobei der dritte Winkel (A3) gleich dem ersten Winkel (A1) minus der Differenz von 180 Grad minus dem zweiten Winkel (A2) ist.

8. Auflagewinkel (10) nach einem der vorhergehenden Ansprüche, wobei der erste und der zweite Montageabschnitt (11, 12) jeweils so konfiguriert sind, dass sie an das zweite Möbelelement durch mindestens ein Befestigungsmittel (14, 15) befestigt werden können.

9. Auflagewinkel (10) nach einem der vorhergehenden Ansprüche, wobei das zweite Möbelelement ein Wandbereich (20) ist, und der erste und der zweite Montageabschnitt (11, 12) so konfiguriert sind, dass sie im Gebrauch an den Wandbereich durch Befestigungsmittel befestigt werden können.

10. Möbelanordnung (100), umfassend
einen Auflagewinkel (10) nach einem der vorhergehenden Ansprüche,
ein erstes Möbelelement (20), das am Auflageabschnitt (11) befestigt ist,
ein zweites Möbelelement (20),
wobei der Auflagewinkel (10) an dem zweiten Möbelelement (20) durch mindestens ein erstes Befestigungsmittel (14), das den ersten Montageabschnitt (12) an dem zweiten Möbelabschnitt befestigt, und mindestens ein zweites Befestigungsmittel (15), das den zweiten Montageabschnitt (15) an dem zweiten Möbelelement befestigt, angeordnet ist,
wobei ein vierter Winkel (A4) zwischen dem ersten Möbelelement und dem zweiten Möbelelement justiert werden kann, indem die Befestigung des mindestens einen ersten Befestigungsmittels (14) und des mindestens einen zweiten Befestigungsmittels (15) an dem zweiten Möbelelement (20) justiert wird.

11. Möbelanordnung (100) nach Anspruch 10, wobei das mindestens eine erste Befestigungsmittel (14) mindestens eine erste Schraube ist und das mindestens eine zweite Befestigungsmittel (15) mindestens eine zweite Schraube ist.

12. Möbelanordnung (100) nach Anspruch 10 oder 11, wobei das erste Möbelelement (30) eine Tischplatte oder eine Schreibtischplatte ist, und das zweite Möbelelement (20) eine Sichtschutzwand ist, die mittels des Auflagewinkels (10) an der Tischplatte oder Schreibtischplatte angeordnet ist.

## Revendications

1. Fixation de support (10) comprenant
une partie de support (11) configurée pour être fixée sur, en utilisation, un premier membre de meuble (30),
une première partie de montage (12), et
une deuxième partie de montage (13), les première et deuxième parties de montage étant configurées pour, en utilisation, être fixées à un deuxième membre de meuble (20) par des moyens de fixation (14, 15),
**caractérisé en ce que** la première partie de montage s'étend de la partie de support avec un premier angle (A1) étant entre 91-110 degrés, et la deuxième partie de montage s'étend de la première partie de montage avec un deuxième angle (A2) étant entre 160-179 degrés.

2. Fixation de support (10) selon la revendication 1, dans laquelle le deuxième angle (A2) est entre 172-178 degrés.

3. Fixation de support (10) selon la revendication 1 ou 2, dans laquelle le deuxième angle (A2) est entre 174-176 degrés.

4. Fixation de support (10) selon l'une quelconque des revendications précédentes, dans laquelle le premier angle (A1) est entre 91-96 degrés.

5. Fixation de support selon l'une quelconque des revendications précédentes, dans laquelle le premier angle (A1) est entre 92-94 degrés.

6. Fixation de support (10) selon l'une quelconque des revendications précédentes, dans laquelle la deuxième partie de montage (13) s'étend avec un troisième angle (A3) par rapport à la partie de montage (11) étant inférieur au premier angle (A1).

7. Fixation de support (10) selon la revendication 6, dans laquelle le troisième angle (A3) est égal au premier angle (A1) moins la différence de 180 degrés moins le deuxième angle (A2).

8. Fixation de support (10) selon l'une quelconque des revendications précédentes, dans laquelle chacune des première et deuxième parties de montage (11, 12) est configurée pour être fixée au deuxième membre de meuble au moyen d'au moins un moyen de fixation (14, 15).

9. Fixation de support (10) selon l'une quelconque des revendications précédentes, dans laquelle le deuxième membre de meuble est une section de mur (20) et les première et deuxième parties de montage (11, 12) sont configurées pour être fixées à ladite section de mur, lorsqu'en utilisation, par des moyens de fixation.

10. Agencement de meuble (100) comprenant
une fixation de support (10) selon l'une quelconque des revendications précédentes,
un premier membre de meuble (20) fixé à la partie de support (11),
un deuxième membre de meuble (20),
dans lequel la fixation de support (10) est agencée sur le deuxième membre de meuble (20) par au moins un premier moyen de fixation (14) fixant la première partie de montage (12) à la deuxième partie de meuble et au moins un deuxième moyen de fixation (15) fixant la deuxième partie de montage (15) au deuxième membre de meuble,
dans lequel un quatrième angle (A4) entre le premier membre de meuble et le deuxième membre de meuble est ajustable en ajustant la fixation de l'au moins un premier moyen de fixation (14) et la fixation de l'au moins un deuxième moyen de fixation (15) au deuxième membre de meuble (20).

11. Agencement de meuble (100) selon la revendication 10, dans lequel l'au moins un premier moyen de fixation (14) est au moins une première vis et l'au moins un deuxième moyen de fixation (15) est au moins une deuxième vis.

12. Agencement de meuble (100) selon la revendication 10 ou 11, dans lequel le premier membre de meuble (30) est un dessus de table ou un dessus de bureau, et le deuxième membre de meuble (20) est un mur d'écran agencé sur le dessus de table ou le dessus de bureau au moyen de la fixation de support (10).
